# EUROPÄISCHE PATENTSCHRIFT

(11) **EP 4 067 939 B1**
(45) Veröffentlichungstag und Bekanntmachung des Hinweises auf die Patenterteilung: **30.04.2025**
(21) Anmeldenummer: 22161345.8
(22) Anmeldetag: 10.03.2022
(51) Int. Cl.: G01S 17/42, G01S 7/481

(54) **OPTOELEKTRONISCHER SENSOR**
OPTOELECTRONIC SENSOR
CAPTEUR OPTOÉLECTRONIQUE

(30) Priorität: 01.04.2021 DE 102021108318
(43) Veröffentlichungstag der Anmeldung: 05.10.2022
(73) Patentinhaber: SICK AG, 79183 Waldkirch (DE)
(72) Erfinder: Baumgartner, August, 79280 Au (DE); Nübling, Ralf Ulrich, 79211 Denzlingen (DE)

(56) Entgegenhaltungen:
- DE-A1- 102010 060 876
- DE-B3- 102016 117 093
- US-A1- 2010 245 801

## Beschreibung

Die Erfindung betrifft einen Sensor zur Erfassung von Objekten in einem Überwachungsbereich nach dem Oberbegriff von Anspruch 1.

Für Abstandsmessungen, die einen großen horizontalen Winkelbereich des Messsystems erforderlich machen, eignen sich optoelektronische Systeme und besonders Laserscanner. In einem Laserscanner überstreicht ein von einem Laser erzeugter Lichtstrahl mit Hilfe einer Ablenkeinheit periodisch einen Überwachungsbereich. Das Licht wird an Objekten in dem Überwachungsbereich remittiert und in dem Scanner ausgewertet. Aus der Winkelstellung der Ablenkeinheit wird auf die Winkellage des Objektes und aus der Lichtlaufzeit unter Verwendung der Lichtgeschwindigkeit zusätzlich auf die Entfernung des Objektes von dem Laserscanner geschlossen.

Mit den Winkel- und Entfernungsangaben ist der Ort eines Objektes in dem Überwachungsbereich in zweidimensionalen Polarkoordinaten erfasst. Damit lassen sich die Positionen von Objekten ermitteln oder durch mehrere Abtastungen desselben Objekts an verschiedenen Stellen dessen Kontur bestimmen. Die dritte Raumkoordinate kann durch eine Relativbewegung in Querrichtung ebenfalls erfasst werden, beispielsweise durch einen weiteren Bewegungsfreiheitsgrad der Ablenkeinheit in dem Laserscanner oder indem das Objekt relativ zu dem Laserscanner befördert wird. So können auch dreidimensionale Konturen ausgemessen werden.

Neben solchen Messanwendungen werden Laserscanner auch in der Sicherheitstechnik zur Überwachung einer Gefahrenquelle eingesetzt, wie sie beispielsweise eine gefährliche Maschine darstellt. Ein derartiger Sicherheitslaserscanner ist aus der DE 43 40 756 A1 bekannt. Dabei wird ein Schutzfeld überwacht, das während des Betriebs der Maschine vom Bedienpersonal nicht betreten werden darf. Erkennt der Laserscanner einen unzulässigen Schutzfeldeingriff, etwa ein Bein einer Bedienperson, so löst er einen Nothalt der Maschine aus. In der Sicherheitstechnik eingesetzte Sensoren müssen besonders zuverlässig arbeiten und deshalb hohe Sicherheitsanforderungen erfüllen, beispielsweise die Norm EN13849 für Maschinensicherheit und die Gerätenorm EN61496 für berührungslos wirkende Schutzeinrichtungen (BWS).

Die Abtastung der Überwachungsebene in einem Laserscanner wird üblicherweise dadurch erreicht, dass der Sendestrahl auf einen rotierenden Umlenkspiegel trifft. Lichtsender, Lichtempfänger sowie zugehörige Elektronik und Optik sind dabei fest im Gerät montiert und vollziehen die Drehbewegung nicht mit. Es ist aber auch bekannt, den Umlenkspiegel durch eine mitbewegte Abtasteinheit zu ersetzen. Beispielsweise rotiert in der DE 197 57 849 B4 der gesamte Messkopf mit Lichtsender und Lichtempfänger. Die EP 2 388 619 A1 sieht ebenfalls eine drehbare Sende-/Empfangseinheit vor. Diese Abtasteinheit wird beispielsweise nach dem Transformationsprinzip von den drehfesten Bereichen des Sensors mit Energie versorgt.

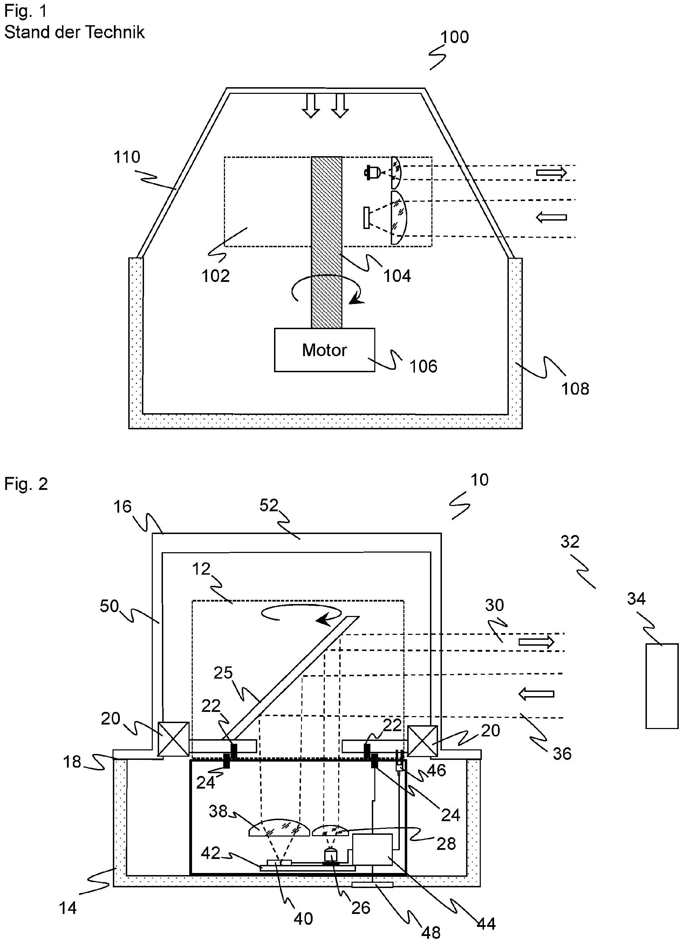

Figur 1 zeigt eine schematische Schnittansicht eines herkömmlichen Laserscanners 100 mit einer derartigen drehbaren Abtasteinheit 102. Die Drehbewegung wird dadurch erzeugt, dass die Abtasteinheit 102 auf einer Welle 104 eines Antriebs 106 sitzt. Der Laserscanner 100 ist von einem Gehäuse 108 geschützt, das im oberen Teil von einer Haube 110 gebildet wird.

Durch die Vielzahl von Baugruppen (Gehäuse, Haube, Antrieb, Abtasteinheit) und Schnittstellen zwischen den Baugruppen ist der Montage- und Justageaufwand groß, insbesondere wenn der Sensor über eine sehr gute Scanfeldebenheit verfügen muss. Bei mitbewegten Abtasteinheiten muss auf dem drehenden Teil des Sensors zusätzlich eine Schnittstelle zur Energie- und Datenübertragung zu Verfügung gestellt werden. Dafür werden weitere Bauteile, bzw. Baugruppen benötigt, die zur Erhöhung der Komplexität des Sensors sowie der Montage und Justage des Sensors beitragen.

Aus der DE 10 2010 060 876 A1 ist ein selbsttätig verfahrbares Bodenstaub-Aufsammelgerät bekannt, wobei das Gerät mit einer Hinderniserkennung versehen ist, die aus optischen Sende- und Empfängereinheiten besteht und wobei ein Element zur Strahlumlenkung vorgesehen ist, wobei weiter zur Rundum-Erfassung zumindest ein Teil der Sende- und Empfängereinheit um 180° oder mehr drehbar und bevorzugt auf einem antreibbaren Drehteil angeordnet ist.

Die US 2010 0 245 801 A1 beschreibt einen optischen Sensor nach dem Laufzeitprinzip, bei dem ein Scanbereich von 360° ermöglicht wird, wobei eine Lichtquelle, ein Detektor und ein Hohlspiegel auf einer gemeinsamen Dreheinrichtung angeordnet sind.

In der DE 102016 117 093 B3 ist ein optoelektronischer Sensor, insbesondere ein Laserscanner, zur Erfassung von Objekten in einem Überwachungsbereich angegeben, wobei der Sensor ein Gehäuse mit einer Haube aufweist, die durch ein Stützelement zusätzlich abgestützt ist.

Daher ist Aufgabe der Erfindung, einen gattungsgemäßen Sensor mit vereinfachtem Aufbau anzugeben.

Diese Aufgabe wird durch einen optoelektronischen Sensor zur Erfassung von Objekten in einem Überwachungsbereich nach Anspruch 1 sowie ein Verfahren zum Lagern einer Abtasteinheit, die Teil eines optoelektronischen Sensors nach Anspruch 1 ist, gelöst.

Der Sensor weist einen Lichtsender und einen Lichtempfänger auf, um den Überwachungsbereich abzutasten, wobei ein Antrieb mit einem Stator und einem Rotor und eine mit Hilfe des Rotors bewegte Abtasteinheit für eine periodische Abtastbewegung sorgen. Der Sensor weist ein Grundgehäuse mit einer Haube auf, wobei das Grundgehäuse und die Haube wenigstens eine Schnittstelle zur mechanischen Verbindung miteinander aufweisen. Die Haube umfasst wenigstens ein erstes Lager zur Aufnahme der Abtasteinheit, wobei die Abtasteinheit mit dem Rotor drehbar in dem ersten Lager gelagert ist. Das erste Lager ist auf der dem Grundgehäuse zugewandten Seite der Haube angeordnet.

Die Erfindung hat den Vorteil, dass durch die Lagerung der Abtasteinheit in der Haube die Anzahl toleranzbehafteter Schnittstellen reduziert wird, was zu einer vereinfachten Montage- und/ oder Justage und damit geringeren Herstellkosten führt. Des Weiteren führt die Lagerung der Abtasteinheit in der Haube zu einer optimalen Lageranordnung (Schwerpunkt der Masse zwischen den Lagerstellen) was zu einer deutlichen Verbesserung bei Schwing- und/oder Schockanforderungen führt. Zugleich wird der ganze Sensor im Feld robuster, hat eine höhere Schock- und Schwing-Festigkeit, und besonders die Outdoorfähigkeit oder die Einsatzmöglichkeiten in anspruchsvollen Umgebungen, in denen der Sensor nicht vor mechanischen Belastungen geschützt werden kann, erhöht sich somit erheblich. Ein Ausfall durch ein defektes Gerät wird wesentlich unwahrscheinlicher.

In einer Ausführungsform der Erfindung können Lichtsender und Lichtempfänger im Grundgehäuse angeordnet sein. Die Abtasteinheit weist dann einen Umlenkspiegel zum Ablenken des Sendelichts in den Überwachungsbereich und des von Objekten in dem Überwachungsbereich remittierten Lichts auf den Lichtempfänger auf. Mit Lichtsender und Lichtempfänger sind vorzugsweise auch zugehörige Sende- und Empfangsoptiken sowie zumindest ein Teil der Sende- und Empfangselektronik sowie möglicherweise der Auswertungseinheit im Grundgehäuse untergebracht. Dies Ausführungsform hat den Vorteil, dass die bewegte Masse des Systems geringgehalten wird, da sich lediglich der Umlenkspiegel mit dem Rotor des Antriebs bewegt.

In einer Ausführungsform der Erfindung kann die Abtasteinheit den Lichtsender und/oder den Lichtempfänger aufweisen. Damit wird die Abtasteinheit zu einem rotierenden Messkopf. Mit Lichtsender und Lichtempfänger sind vorzugsweise auch zugehörige Sende- und Empfangsoptiken sowie zumindest ein Teil der Sende- und Empfangselektronik sowie möglicherweise der Auswertungseinheit in der Abtasteinheit untergebracht.

Der Stator des Antriebs kann im Grundgehäuse oder in der Haube angeordnet sein. Sind Stator und Rotor in der Haube angeordnet, entfallen Toleranzen für die mechanische Schnittstelle zwischen Haube und Grundgehäuse, die sich auf die Ausrichtung von Rotor und Stator gegeneinander beziehen. Die Anordnung im Grundgehäuse kann dann vorteilhaft, sein, wenn die Abtasteinheit als Umlenkspiegel ausgeführt ist und die übrigen Komponenten des Sensors im Grundgehäuse angeordnet sind, da dann keine elektrische Verbindung zur Haube notwendig ist.

Die Haube kann ein zweites Lager zur drehbaren Lagerung der Abtasteinheit aufweisen, wobei das erste Lager auf der dem Grundgehäuse zugewandten Seite der Haube angeordnet ist und das zweite Lager auf der dem Grundgehäuse abgewandten Seite der Haube angeordnet ist. Dadurch kann die höhere Schock- und Schwing-Festigkeit des Sensors verbessert werden. Die Dimensionierung der Lager kann optional an eine Form der Haube angepasst werden. Beispielsweise kann das zweite Lager einen geringeren Durchmesser aufweisen als das erste Lager.

Die Haube kann mechanischen Aufnahmen für das erste und /oder das zweite Lager aufweisen, die vorteilhafterweise integraler Bestandteil der Haube sind. Dadurch entfällt nahezu jegliche Toleranz zwischen Haube und Abtasteinheit. Die Aufnahmen für das erste und /oder das zweite Lager können beispielsweise während eines Spritzgussprozesses zur Herstellung der Haube in dieser fixiert werden.

Die Haube ist als Rotationskörper mit einer Seitenwand und einem Deckelbereich ausgebildet. Die Seitenwand bildet beispielsweise einen Kreiszylinder, einen Kegelstumpf oder einen Kugelabschnitt, es sind aber auch kompliziertere Konturen beispielsweise wie bei einem Kelch denkbar. Nach oben hin wird dies dann durch einen Deckelbereich abgeschlossen, der kreisförmig sein, aber auch eine Wölbung aufweisen kann.

Die Haube weist eine Frontscheibe als Austrittsbereich für das Sendelicht und Eintrittsbereich für das remittierte Licht auf. Diese Frontscheibe ist integraler Bestandteil der Seitenwand der Haube.

Die Haube ist bevorzugt aus für das Sendelicht transparentem Kunststoff hergestellt. Die Transparenzeigenschaft gilt damit natürlich auch für das remittierte Empfangslicht, da es dieselbe Wellenlänge aufweist. Damit gewinnt die Haube die Eigenschaften, um zugleich als Frontscheide zu dienen. Für das bloße Auge muss allerdings die Haube keineswegs transparent sein, sondern ist beispielsweise schwarz und undurchsichtig, da für das Sendelicht häufig ein Spektralbereich außerhalb des sichtbaren Bereichs genutzt wird, insbesondere Infrarotlicht.

Die Haube ist vorzugsweise ein einziges Bauteil, keine Baugruppe aus mehreren Elementen, um die Herstellung der Haube und deren Handhabung während der Montage des Sensors zu vereinfachen.

Es kann ein Stützelement vorgesehen sein, dass die Haube zentral abstützt Der Abstützbereich an der Haube befindet sich dabei insbesondere etwa in der Mitte des Deckelbereichs. Geeignete Stützelemente und Anordnungen sind beispielsweise in der EP 3 293 546 B1 beschrieben.

Der Sensor ist bevorzugt ein entfernungsmessender Sensor, indem die Auswertungseinheit die Lichtlaufzeit zwischen Aussenden des Lichtsignals und Empfang des remittierten Lichts und daraus die Entfernung eines Objekts bestimmt. Damit können wesentlich genauere Objektinformationen gewonnen werden als durch bloße Feststellung der Anwesenheit von Objekten.

Vorzugsweise ist eine Winkelmesseinheit zur Erfassung der Winkelstellung der Abtasteinheit vorgesehen. Insgesamt stehen dann für erfasste Objekte vollständige zweidimensionale Positionskoordinaten zur Verfügung. Im Falle eines räumlich ausgedehnten Überwachungsbereichs durch Bewegung der Abtasteinheit in zwei Achsen wird vorzugsweise auch der jeweilige Kippwinkel der Abtasteinheit erfasst, so dass dann insgesamt dreidimensionale Kugelkoordinaten erhalten werden, welche die Objektposition innerhalb des Überwachungsbereichs ebenfalls vollständig beschreiben.

Der Sensor ist bevorzugt als Sicherheitssensor ausgebildet und weist einen Sicherheitsausgang auf, wobei die Auswertungseinheit dafür ausgebildet ist zu bestimmen, ob sich ein Objekt in einem Schutzfeld innerhalb des Überwachungsbereichs befindet, um daraufhin ein sicherheitsgerichtetes Abschaltsignal über den Sicherheitsausgang auszugeben. Ein Sicherheitssensor ist sicher im Sinne einer Sicherheitsnorm wie einleitend beschrieben und kann deshalb insbesondere zum Personenschutz an Gefahrenquellen eingesetzt werden.

Die Erfindung wird nachstehend auch hinsichtlich weiterer Merkmale und Vorteile beispielhaft anhand von Ausführungsformen und unter Bezug auf die beigefügte Zeichnung näher erläutert. Dabei bezeichnen gleiche Bezugszeichen gleiche oder analoge Merkmale. Die Abbildungen der Zeichnung zeigen in:
- Fig. 1: eine schematische Schnittdarstellung eines herkömmlichen Laserscanners;
- Fig. 2: eine schematische Schnittdarstellung einer Ausführungsform eines erfindungsgemäßen Laserscanners mit einer als Umlenkspiegel ausgeführten Abtasteinheit;
- Fig. 3: eine schematische Schnittdarstellung einer Ausführungsform eines erfindungsgemäßen Laserscanners ähnlich Figur 2;
- Fig. 4: eine schematische Schnittdarstellung einer weiteren Ausführungsform eines erfindungsgemäßen Laserscanners ähnlich Figur 2;
- Fig. 5: eine schematische Schnittdarstellung einer Ausführungsform eines erfindungsgemäßen Laserscanners mit einer einen Lichtsender und Lichtempfänger umfassenden Abtasteinheit;
- Fig. 6: eine schematische Schnittdarstellung einer weiteren Ausführungsform eines erfindungsgemäßen Laserscanners ähnlich Figur 6;

Fig. 2 zeigt eine schematische Schnittdarstellung durch einen erfindungsgemäßen optoelektronischen Sensor in einer Ausführungsform als Laserscanner 10. Der Laserscanner 10 umfasst in grober Aufteilung eine bewegliche Abtasteinheit 12, ein Grundgehäuse 14 und eine Haube 16. Das Grundgehäuse 14 und die Haube 16 sind über wenigstens eine Schnittstelle 18 mechanisch miteinander verbunden. Die Haube 16 weist eine Seitenwand 50 auf, hier in Form eines Zylinders, allgemein als Rotationskörper aus einer geeigneten Kontur. Die Seitenwand 50 dient als Frontscheibe, durch die Sendelicht 30 ausbeziehungsweise aus dem Überwachungsbereich 32 remittiertes Licht 36 eintritt. Dementsprechend ist sie aus einem Material hergestellt, das für das von einem Lichtsender 26 erzeugte Sendelicht 30 transparent ist. Die Haube 16 wird nach oben hin durch einen Deckelbereich 52 abgeschlossen, der mit der Seitenwand 50 verbunden und vorzugsweise damit gemeinsam ausgebildet ist. Beispielsweise ist die Haube 16 ein einziges Kunststoffbauteil, das in einem Spritzgussverfahren hergestellt werden kann.

Die Haube 16 umfasst wenigstens ein erstes Lager 20 zur Aufnahme der Abtasteinheit 12, wobei das erste Lager 20 auf der dem Grundgehäuse 14 zugewandten Seite der Haube 16 angeordnet und die Abtasteinheit 12 drehbar in dem ersten Lager 20 gelagert ist. Die Abtasteinheit 12 weist weiterhin wenigstens einen Rotor 22 auf, durch den die Abtasteinheit in Verbindung mit wenigstens einem im Grundgehäuse 14 angeordneten Stator 24 in eine Schwing- oder Drehbewegung versetzt werden kann. Rotor 22 und Stator 24 bilden somit gemeinsam einen Antrieb für die Abtasteinheit 12.

Die Abtasteinheit 12 weist in dieser Ausführungsform einen Umlenkspiegel 25 auf, weitere Komponenten des Laserscanners 10, sind im Grundgehäuse 14 angeordnet. Ein Lichtsender 26 erzeugt mit Hilfe einer Sendeoptik 28 Sendelicht 30, das über den Umlenkspiegel 25 der Abtasteinheit 12 in einen Überwachungsbereich 32 ausgesandt wird. Trifft das Sendelicht 30 im Überwachungsbereich 32 auf ein Objekt 34, so kehrt ein entsprechend remittiertes Licht 36 zum Laserscanner 10 zurück. Das remittierte Licht 36 wird über den Umlenkspiegel 25 der Abtasteinheit 12 auf eine Empfangsoptik 38 im Grundgehäuse 14 geführt, von dieser auf einen Lichtempfänger 40 fokussiert und dort in ein elektrisches Empfangssignal gewandelt. Lichtsender 26 und Lichtempfänger 34 sind hier gemeinsam auf einer Leiterkarte 42 untergebracht.

Eine Steuer- und Auswertungseinheit 44 steuert den Stator 24 des Antriebs der Abtasteinheit sowie den Lichtsender 26, wertet das Empfangssignal des Lichtempfängers 40 aus und erhält das Signal einer Winkelmesseinheit 46, welche die jeweilige Winkelstellung der Abtasteinheit 12 bestimmt. Die Steuer- und Auswertungsfunktionalität kann weitgehend frei zwischen der Leiterkarte 42 und der Auswertungseinheit 44 verteilt sein, wird aber so beschrieben, als sei allein die Auswertungseinheit 44 dafür zuständig.

Zur Auswertung wird vorzugsweise mit einem Lichtlaufzeitverfahren die Distanz zu dem angetasteten Objekt 34 gemessen. Dazu wird in einem phasenbasierten System das Sendelicht des Lichtsenders 26 moduliert und eine Phasenbeziehung zu dem Empfangssignal des Lichtempfängers 40 ausgewertet. Alternativ werden in einem pulsbasierten System kurze Lichtpulse zu einem Sendezeitpunkt ausgesandt und aus dem Empfangssignal deren Empfangszeitpunkt ermittelt. Dabei sind sowohl Einzelpulsverfahren, die jeweils aus einem einzigen Sendepuls eine Entfernung bestimmen, als auch Pulsmittelungsverfahren denkbar, in denen das Empfangssignal nach einer Vielzahl aufeinanderfolgender Sendepulse gesammelt und statistisch ausgewertet wird. Die jeweilige Winkelstellung, unter welcher das Sendelicht 30 jeweils ausgesandt wurde, ist von der Winkelmesseinheit 46 ebenfalls bekannt. Somit stehen nach jeder Scanperiode, also Umdrehung der Abtasteinheit 12, über den Winkel und die Entfernung zweidimensionale Polarkoordinaten aller Objektpunkte in einer Abtastebene zur Verfügung.

Damit sind die Objektpositionen beziehungsweise Objektkonturen bekannt und können über eine Sensorschnittstelle 48 ausgegeben werden. Die Sensorschnittstelle 44 oder ein weiterer, nicht gezeigter Anschluss dienen umgekehrt als Parametrierschnittstelle. Bei Anwendungen in der Sicherheitstechnik werden Schutzfelder, die in dem Überwachungsbereich 22 konfiguriert werden können, auf unzulässige Eingriffe überwacht, und daraufhin wird gegebenenfalls ein sicherheitsgerichtetes Abschaltsignal über die dann sicher ausgebildete Schnittstelle 48 (z.B. OSSD, Output Signal Switching Device) ausgegeben.

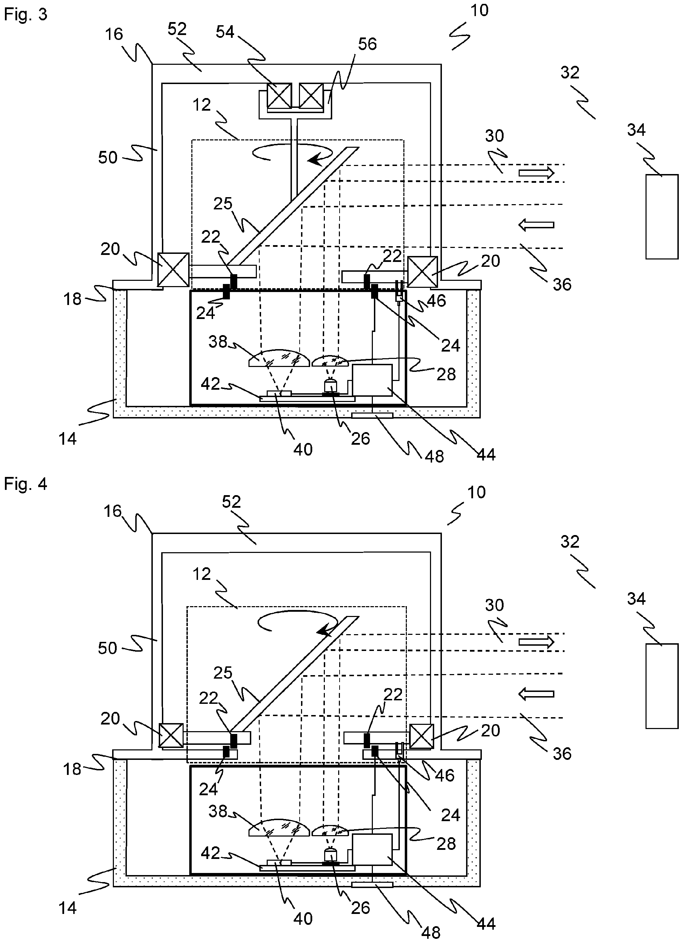

Figur 3 zeigt eine Abwandlung der Ausführungsform des Laserscanners 10 aus Figur 2. Die Haube 16 weist dabei ein zweites Lager 54 zur drehbaren Lagerung der Abtasteinheit 12 mit einem Stabilisierungselement 56 auf, wobei das zweite Lager 54 auf der dem Grundgehäuse 14 abgewandten Seite der Haube 16 angeordnet ist. Das zweite Lager 54 weist einen geringeren Durchmesser auf als das erste Lager 20.

Figur 4 zeigt eine weitere Abwandlung der Ausführungsform des Laserscanners 10 aus Figur 2, wobei im Unterschied zur Ausführungsform aus Figur 2 die Haube 16 sowohl der Rotor 22 also auch den Stator 24 des Antriebs der Abtasteinheit 12 umfasst. Dadurch entfallen Toleranzen für die mechanische Schnittstelle 18 zwischen Haube 16 und Grundgehäuse 14, die sich auf die Ausrichtung von Rotor 22 und Stator 24 gegeneinander beziehen.

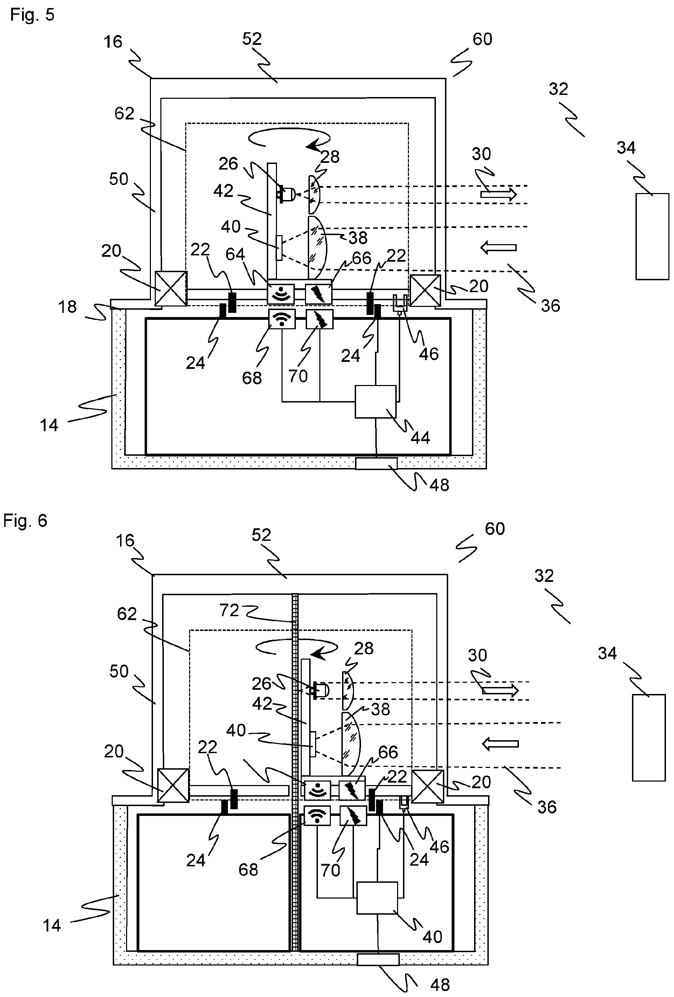

Figur 5 zeigt eine alternative Ausführungsform eines erfindungsgemäßen Sensors. Wie bei den in den Figuren 2-5 gezeigten Ausführungsformen, umfasst der als Laserscanner 60 ausgeführte optoelektronische Sensor in grober Aufteilung eine bewegliche Abtasteinheit 62, ein Grundgehäuse 14 und eine Haube 16. Das Grundgehäuse 14 und die Haube 16 sind über wenigstens eine Schnittstelle 18 mechanisch miteinander verbunden. Die Haube 16 weist eine Seitenwand 50 auf, hier in Form eines Zylinders, allgemein als Rotationskörper aus einer geeigneten Kontur. Die Seitenwand 50 dient als Frontscheibe, durch die Sendelicht 30 aus- beziehungsweise aus dem Überwachungsbereich remittiertes Licht 36 eintritt. Dementsprechend ist sie aus einem Material hergestellt, das für das von einem Lichtsender 26 erzeugte Sendelicht 30 transparent ist. Die Haube 16 wird nach oben hin durch einen Deckelbereich 52 abgeschlossen, der mit der Seitenwand 50 verbunden und vorzugsweise damit gemeinsam ausgebildet ist. Beispielsweise ist die Haube 16 ein einziges Kunststoffbauteil, das in einem Spritzgussverfahren hergestellt werden kann. Die Haube 16 umfasst wenigstens ein erstes Lager 20 zur Aufnahme der Abtasteinheit 62, wobei das erste Lager 20 auf der dem Grundgehäuse 14 zugewandten Seite der Haube 16 angeordnet und die Abtasteinheit 12 drehbar in dem ersten Lager 20 gelagert ist. Die Abtasteinheit 62 weist weiterhin wenigstens einen Rotor 22 auf, durch den die Abtasteinheit 62 in Verbindung mit wenigstens einem im Grundgehäuse 14 angeordneten Stator 24 in eine Schwing- oder Drehbewegung versetzt werden kann um so einen Überwachungsbereich 32 periodisch abzutasten. Rotor 22 und Stator 24 bilden somit gemeinsam einen Antrieb für die Abtasteinheit 62.

Im Unterschied zu den in den Figuren 2-5 gezeigten Ausführungsformen ist die Abtasteinheit 62 als optischer Messkopf ausgebildet, in dem ein Lichtsender 26 mit Hilfe einer Sendeoptik 28 Sendelicht 30 in den Überwachungsbereich 32 aussendet. Trifft das Sendelicht 30 im Überwachungsbereich 32 auf ein Objekt 34, so kehrt entsprechendes remittiertes Licht 36 zum Laserscanner 60 zurück. Das remittierte Licht 36 wird von einer Empfangsoptik 38 auf einen Lichtempfänger 40 geführt und dort in ein elektrisches Empfangssignal gewandelt. Lichtsender 26 und Lichtempfänger 40 sind hier gemeinsam auf einer ersten Leiterkarte 42 untergebracht. Die Abtasteinheit 62 weist weiterhin ein erstes Energieübertragungsmodul 64 und ein erstes Datenübertragungsmodul 66 auf

Die Anordnung in der Abtasteinheit 62 ist rein beispielhaft zu verstehen. So können Lichtsender 26 und Lichtempfänger 40 auch jeweils auf einer eigenen Leiterkarte untergebracht sein und insgesamt mehr oder weniger Leiterkarten in anderer Anordnung vorgesehen sein. Prinzipiell ist jede andere an sich von einstrahligen optoelektronischen Sensoren oder Laserscannern bekannte Anordnung wie etwa eine Doppellinse mit Sendeoptik im Zentrum einer Empfangslinse oder die Verwendung eines Strahlteilerspiegels möglich. Es ist nicht einmal zwingend erforderlich, das ein tastendes System aus Lichtsender 26 und Lichtempfänger 40 aufgebaut wird, stattdessen kann auch ein anderer Sensor oder eine Kombination mehrerer Sensoren rotieren, etwa um eine Mehrfachabtastung in mehreren Ebenen zu erreichen, wie dies etwa in der DE 10 2013 111 547 A1 beschrieben ist.

Das Grundgehäuse 14 des Laserscanners 62 umfasst neben dem Stator 24 eine Steuer- und Auswertungseinheit 44 und eine Sensorschnittstelle 48 sowie ein zweites Energieübertragungsmodul 68 und ein zweites Datenübertragungsmodul 70. Über das erste und das zweite Energieübertragungsmodul 64, 68 kann eine Energieversorgung der Abtasteinheit 62, insbesondere des Lichtsenders 26 und des Lichtempfängers 40 erfolgen. Das erste und das zweite Datenübertragungsmodul dienen zur drahtlosen, bidirektionalen Datenübertragung von Steuersignalen der Steuer- und Auswertungseinheit 44 an die Abtasteinheit 62 sowie von elektrisches Empfangssignalen des Lichtempfängers 40 an die Steuer- und Auswertungseinheit 44. Die Steuer- und Auswertungseinheit 44 wertet das Empfangssignal aus, steuert den Antrieb 16 und erhält das Signal einer Winkelmesseinheit 42, welche die jeweilige Winkelstellung der Abtasteinheit 62 bestimmt. Die Steuer- und Auswertungsfunktionalität kann weitgehend frei zwischen der Abtasteinheit 62, insbesondere der Leiterkarten 42 und der Auswertungseinheit 40 verteilt sein. Die Auswertung der Empfangssignale erfolgt analog zur Beschreibung in Figur2.

Figur 6 zeigt eine Abwandlung der Ausführungsform des Laserscanners 60 aus Figur 5 Die Haube 16 wird im Deckelbereich 52, in dieser Ausführungsform zentral, durch ein Stützelement 72 abgestützt. Das Stützelement 72 kann eine einfache Form haben, etwa als Stift oder Stange ausgebildet sein. Die Verbindung zwischen Haube 16 und Stützelement 72 ist vorzugsweise fix. Eine drehbare Lagerung ist dabei nicht vorgesehen und auch nicht erforderlich, weil das Stützelement 72 die Bewegung der Abtasteinheit 62 nicht mitvollzieht. Das Stützelement 72 verläuft vielmehr durch eine Aussparung in der Abtasteinheit 62 bis zum Grundgehäuse 14. Damit ist die Haube 16 an den Schnittstellen 18 und zusätzlich im Deckelbereich 52 stabil mit dem Grundgehäuse verbunden.

## Patentansprüche

1. Optoelektronischer Sensor (10, 60), insbesondere Laserscanner, zur Erfassung von Objekten (34) in einem Überwachungsbereich (32), wobei der Sensor (10, 60) einen Lichtsender (26) zum Aussenden von Sendelicht (30), einen Antrieb mit einem Stator (24) und einem Rotor (22), eine mit Hilfe des Rotors (22) bewegbare Abtasteinheit (12, 62) zur periodischen Abtastung des Überwachungsbereichs (32) mit dem Sendelicht (30), einen Lichtempfänger (40) zum Erzeugen eines Empfangssignals aus von Objekten (34) im Überwachungsbereich (32) remittiertem Licht (30), eine Steuer- und Auswertungseinheit (44) zur Erfassung von Informationen über Objekte (34) im Überwachungsbereich (32) anhand des Empfangssignals und ein Grundgehäuse (14) mit einer Haube (16) aufweist,
wobei das Grundgehäuse (14) und die Haube (16) wenigstens eine Schnittstelle (18) zur mechanischen Verbindung miteinander aufweisen, und die Haube (16) als Rotationskörper mit einer Seitenwand (50) und einem Deckelbereich (52) ausgebildet ist und eine Frontscheibe (50) als Austrittsbereich für das Sendelicht (30) und Eintrittsbereich für das remittierte Licht (36) aufweist, wobei die Frontscheibe (50) integraler Bestandteil der Seitenwand (50) der Haube (16) ist,
wobei die Haube (16) wenigstens ein erstes, auf der dem Grundgehäuse (14) zugewandten Seite der Haube (16) angeordnetes Lager (20) zur Aufnahme der Abtasteinheit (12, 62) umfasst, wobei die Abtasteinheit (12, 62) mit dem Rotor (22) drehbar in dem ersten Lager (20) gelagert ist und die Seitenwand (50) der Haube (16) das erste Lager (20) umfasst.

2. Optoelektronischer Sensor (10, 60) nach Anspruch 1, **dadurch gekennzeichnet, dass** der Stator (24) im Grundgehäuse (14) angeordnet ist.

3. Optoelektronischer Sensor (10, 60), nach Anspruch 1, **dadurch gekennzeichnet, dass** der Stator (24) in der Haube (16) angeordnet ist.

4. Optoelektronischer Sensor (10, 60) nach einem der vorhergehenden Ansprüche, **dadurch gekennzeichnet, dass** die Haube (16) ein zweites Lager (54) zur drehbaren Lagerung der Abtasteinheit (12, 62) aufweist, wobei das zweite Lager (54) auf der dem Grundgehäuse (14) abgewandten Seite der Haube (16) angeordnet ist.

5. Optoelektronischer Sensor (10, 60) nach einem der vorhergehenden Ansprüche, **dadurch gekennzeichnet, dass** die Haube (16) aus für das Sendelicht (30) transparentem Kunststoff hergestellt ist.

6. Optoelektronischer Sensor (10) nach einem der vorhergehenden Ansprüche, **dadurch gekennzeichnet, dass** der Lichtsender (26) und der Lichtempfänger (40) im Grundgehäuse (14) angeordnet sind, und die Abtasteinheit (12) einen Umlenkspiegel (25) zum Ablenken des Sendelichts (30) in den Überwachungsbereich (32) und des von Objekten (34) im Überwachungsbereich (32) remittierten Lichts (36) auf den Lichtempfänger (40) aufweist.

7. Optoelektronischer Sensor (60) nach einem der Ansprüche 1 - 5, **dadurch gekennzeichnet, dass** die Abtasteinheit (62) den Lichtsender (26) und/oder den Lichtempfänger (40) aufweist.

8. Optoelektronischer Sensor (60) nach Anspruch 7, **dadurch gekennzeichnet, dass** der Sensor (60) ein Stützelement (72) zur zentralen Abstützung der Haube (16) aufweist.

## Claims

1. Optoelectronic sensor (10, 60), in particular a laser scanner, for detecting objects (34) in a monitoring area (32), the sensor (10, 60) comprising a light transmitter (26) for emitting transmitted light (30), a drive with a stator (24) and a rotor (22), a scanning unit (12, 62) movable with the aid of the rotor (22) for periodically scanning the monitoring area (32) with the transmitted light (30), a light receiver (40) for generating a received signal from light (30) remitted by objects (34) in the monitoring area (32), a control and evaluation unit (44) for detecting information about objects (34) in the monitoring area (32) using the received signal, and a base housing (14) with a hood (16),
the base housing (14) and the hood (16) having at least one interface (18) for mechanical connection to one another, and the hood (16) being designed as a body of revolution with a side wall (50) and a cover region (52) and having a front screen (50) as an exit region for the transmitted light (30) and entry region for the remitted light (36), the front screen (50) being an integral component of the side wall (50) of the hood (16),
wherein the hood (16) comprises at least one first bearing (20) arranged on the side of the hood (16) facing the base housing (14) for receiving the scanning unit (12, 62), wherein the scanning unit (12, 62) is rotatably mounted with the rotor (22) in the first bearing (20) and the side wall (50) of the hood (16) comprises the first bearing (20).

2. Optoelectronic sensor (10, 60) according to claim 1, **characterized in that** the stator (24) is arranged in the base housing (14).

3. Optoelectronic sensor (10, 60) according to claim 1, **characterized in that** the stator (24) is arranged in the hood (16).

4. Optoelectronic sensor (10, 60) according to one of the preceding claims, **characterized in that** the hood (16) has a second bearing (54) for rotatably mounting the scanning unit (12, 62), the second bearing (54) being arranged on the side of the hood (16) facing away from the base housing (14).

5. Optoelectronic sensor (10, 60) according to one of the preceding claims, **characterized in that** the hood (16) is made of plastic that is transparent to the transmitted light (30).

6. Optoelectronic sensor (10) according to one of the preceding claims, **characterized in that** the light transmitter (26) and the light receiver (40) are arranged in the base housing (14), and the scanning unit (12) has a deflecting mirror (25) for deflecting the transmitted light (30) into the monitoring area (32) and the light (36) remitted from objects (34) in the monitoring area (32) onto the light receiver (40).

7. Optoelectronic sensor (60) according to one of claims 1 - 5, **characterized in that** the sensing unit (62) comprises the light transmitter (26) and/or the light receiver (40).

8. Optoelectronic sensor (60) according to claim 7, **characterized in that** the sensor (60) has a support element (72) for centrally supporting the hood (16).

## Revendications

1. Capteur optoélectronique (10, 60), en particulier scanner laser, pour la détection d'objets (34) dans une zone de surveillance (32), le capteur (10, 60) présentant un émetteur de lumière (26) pour émettre une lumière d'émission (30), un entraînement avec un stator (24) et un rotor (22), une unité de balayage (12, 62) mobile à l'aide du rotor (22) pour balayer périodiquement la zone de surveillance (32) avec la lumière d'émission (30), un récepteur de lumière (40) pour générer un signal de réception à partir de la lumière (30) réémise par des objets (34) dans la zone de surveillance (32), une unité de commande et d'évaluation (44) pour saisir des informations sur des objets (34) dans la zone de surveillance (32) à l'aide du signal de réception et un boîtier de base (14) avec un capot (16),
dans lequel le boîtier de base (14) et le capot (16) présentent au moins une interface (18) pour la liaison mécanique entre eux, et le capot (16) est conçu comme un corps de rotation avec une paroi latérale (50) et une zone de couvercle (52) et présente une vitre frontale (50) comme zone de sortie pour la lumière d'émission (30) et zone d'entrée pour la lumière réémise (36), et la vitre frontale (50) étant une partie intégrale de la paroi latérale (50) du capot (16),
dans lequel le capot (16) comprend au moins un premier palier (20) disposé sur le côté du capot (16) tourné vers le boîtier de base (14) pour recevoir l'unité de balayage (12, 62), et l'unité de balayage (12, 62) étant logée avec le rotor (22) de manière rotative dans le premier palier (20) et la paroi latérale (50) du capot (16) comprenant le premier palier (20).

2. Capteur optoélectronique (10, 60) selon la revendication 1, **caractérisé en ce que** le stator (24) est disposé dans le boîtier de base (14).

3. Capteur optoélectronique (10, 60), selon la revendication 1, **caractérisé en ce que** le stator (24) est disposé dans le capot (16).

4. Capteur optoélectronique (10, 60) selon l'une des revendications précédentes, **caractérisé en ce que** le capot (16) présente un deuxième palier (54) pour le montage rotatif de l'unité de balayage (12, 62), dans lequel le deuxième palier (54) est disposé sur le côté du capot (16) opposé au boîtier de base (14).

5. Capteur optoélectronique (10, 60) selon l'une des revendications précédentes, **caractérisé en ce que** le capot (16) est fabriqué en matière plastique transparente pour la lumière d'émission (30).

6. Capteur optoélectronique (10) selon l'une des revendications précédentes, **caractérisé en ce que** l'émetteur de lumière (26) et le récepteur de lumière (40) sont disposés dans le boîtier de base (14), et l'unité de balayage (12) présente un miroir de déviation (25) pour dévier la lumière d'émission (30) dans la zone de surveillance (32) et la lumière (36) réémise par des objets (34) dans la zone de surveillance (32) sur le récepteur de lumière (40).

7. Capteur optoélectronique (60) selon l'une des revendications 1 à 5, **caractérisé en ce que** l'unité de détection (62) présente l'émetteur de lumière (26) et/ou le récepteur de lumière (40).

8. Capteur optoélectronique (60) selon la revendication 7, **caractérisé en ce que** le capteur (60) présente un élément de support (72) pour le support central du capot (16).
